# EUROPEAN PATENT APPLICATION

(11) **EP 4 729 805 A1**
(43) Date of publication of application: **22.04.2026**
(21) Application number: 24207712.1
(22) Date of filing: 21.10.2024
(51) Int. Cl.: F16H 48/10, F16H 48/38, F16H 48/42, F16H 57/021, B60B 35/18

(54) **TORQUE DISTRIBUTION GEARING FOR A VEHICLE**

(71) Applicant: ZF Friedrichshafen AG, 88046 Friedrichshafen (DE)
(72) Inventor: Sun, Jiabin, Shanghai, 201615 (CN); Fan, Zhenhua, Shanghai, 201615 (CN); Fei, Ningzhong, Shanghai, 201615 (CN)
(74) Representative: WBH Wachenhausen Patentanwälte PartG mbB

(57) **Abstract**

The invention relates to a torque distribution gearing for a vehicle. The torque distribution gearing comprises planetary gear set elements, an input shaft, a first output shaft arranged coaxially to the input shaft and a second output shaft arranged coaxially to the first output shaft. The torque distribution gearing is configured to distribute a torque of the input shaft between the first output shaft and the second output shaft. The torque distribution gearing is configured such that the input shaft and the first output shaft rotate in the same direction. The torque distribution gearing comprises a first bearing for rotatably supporting the first output shaft with respect to the input shaft and a second bearing for rotatably supporting the first output shaft with respect to the second output shaft. Furthermore, the invention relates to a vehicle with the torque distribution gearing.

## Description

### Technical field

The present disclosure relates to a torque distribution gearing for a vehicle and to a vehicle with a torque distribution gearing.

### Prior art

Torque distribution gearings for vehicles are known. Generally, the torque distribution gearing is provided with one or more gear sets and one or more shafts that are rotatably supported in a housing and operatively connected to the gear sets. In some cases, radial and axial forces may arise in the shafts, for example due to a configuration of the gear sets. In some cases, it may be necessary to transfer such forces of the shafts to the housing.

### Summary of the invention

The present disclosure relates in a first aspect to a torque distribution gearing for a vehicle. Examples for the vehicle may include a car, a truck, a bus and a working vehicle. Examples for the working vehicle may include a tractor, a combine harvester, a communal vehicle like a street sweeping machine, an excavator, a grader and a loader. The torque distribution gearing comprises planetary gear set elements, an input shaft, a first output shaft arranged coaxially to the input shaft and a second output shaft arranged coaxially to the first output shaft. The torque distribution gearing may be configured for converting an input value into an output value. For example, the torque distribution gearing may be able to convert an input rotational speed into a lower or higher output rotational speed and an input torque into a higher or lower output torque. The torque distribution gearing may comprise one or more planetary gear sets configured to convert torques and rotational speeds from one value to another. The planetary gear set elements may be part of one or more planetary gear sets. For example, the torque distribution gearing may comprise two planetary gear sets with three planetary gear set elements each. The planetary gear set elements may be rotatable or non-rotatably fixed and may be configured for transferring torque. Some of the planetary gear set elements may be formed, for example, as a sun gear, a planetary carrier or a ring gear. A housing may be provided as one or several casings for enclosing stationary and/or rotational components of the torque distribution gearing. The housing may also be configured as a stationary member for providing support and for receiving forces and torques. At least one of the input shaft, the first output shaft and the second output shaft may be formed as a hollow shaft for coaxially accommodating another shaft therein. In one example, portions of the input shaft and the second output shaft may comprise a hollow volume around a center axis thereof, and the first output shaft may be accommodated in the hollow volume.

The torque distribution gearing is configured to distribute a torque of the input shaft between the first output shaft and the second output shaft. The vehicle may comprise a driving unit for directly or indirectly driving the input shaft. The driving unit may comprise an internal combustion engine and/or an electric motor. The driving unit may receive energy from an energy storage, for example a tank or a battery, and convert it to rotational mechanical energy, for example to a driving torque for the input shaft. The vehicle may comprise a shiftable transmission disposed in a torque flow between the driving unit and the torque distribution gearing. Each output shaft of the torque distribution gearing may be mechanically operatively connected to a drive element of the vehicle. If two elements are mechanically operatively connected, the elements are directly or indirectly coupled to each other so that a movement of one element causes a reaction of the other element. A mechanical operative connection can be established, for example, by frictional engagement or geometric fit. The mechanical operative connection can correspond to a meshing between corresponding gears of the two elements. Further elements, such as shafts, constant velocity joints and/or one or more gear sets, may be present between the elements. The drive element may be, for example, a wheel for contacting the ground or a drive wheel or sprocket for tracks.

The torque distribution gearing is configured such that the input shaft and the first output shaft rotate in the same direction. For example, if the torque distribution gearing comprises a single planetary gear set, it may be formed as a plus planetary gear set. If the torque distribution gearing comprises two or more planetary gear sets, the input shaft and the first output shaft may be connected to elements of one or more planetary gear sets that rotate in the same direction, for example during a regular operation of the vehicle. The regular operation of the vehicle may relate to an operational state, in which the vehicle is most commonly operated. For example, the regular operation may relate to a forward driving state of the vehicle. The regular operation may also relate to an operational state, in which the input shaft and the output shafts rotate at high rotational speeds, for example more than half of their respective maximum rotational speeds.

The torque distribution gearing comprises a first bearing for rotatably supporting the first output shaft with respect to the input shaft and a second bearing for rotatably supporting the first output shaft with respect to the second output shaft. The first bearing and the second bearing may be the same or different from each other. The first and second bearings may be, for example, radial bearings, axial bearings or combined bearings. A radial bearing may be configured for transferring radial loads while allowing axial displacement. An axial bearing may be configured for transferring axial loads while allowing radial displacement. A combined bearing may be configured for transferring both radial and axial loads. Each bearing may be formed as a single bearing element or a group of several bearing elements. Examples for bearings include angular contact ball bearings, conical bearings, cylindrical roller bearings, tapered roller bearings, axial roller bearings and plain bearings. In one example, at least one of the first bearing and the second bearing may be formed as a deep groove ball bearing. In one example, at least one of the first bearing and the second bearing may be formed as a cylindrical roller bearing with a double-sided rib. In these examples, the first bearing and the second bearing may be configured for transferring both radial and axial loads. The torque distribution gearing may comprise additional bearings. Examples for the additional bearings may include a bearing for radially supporting the first output shaft with respect to the input shaft, a bearing for radially supporting at least one of the input shaft, the first output shaft and the second output shaft in the stationary member as well as a bearing for axially supporting at least one of the input shaft, the first output shaft and the second output shaft in the stationary member. In one configuration, the first output shaft may not be supported by a bearing that is directly supported in the stationary member. For example, the first output shaft may be only supported in the second output shaft and/or the input shaft.

According to the first aspect, a torque distribution gearing is provided, in which the first output shaft is rotatably supported with respect to the input shaft and the second output shaft. In other words, the first bearing and the second bearing are configured to support the first output shaft by the input shaft and the second output shaft. Furthermore, the input shaft and the first output shaft rotate generally in the same direction. Accordingly, a difference in rotational speeds between the input shaft and the first output shaft is lower compared to a case, in which the first output shaft is supported with respect to a stationary member. Furthermore, a difference in rotational speeds between the first output shaft and the second output shaft is relatively small during regular operation compared to a difference in rotational speeds between each output shaft and the stationary member. By supporting the first output shaft with respect to the input shaft and the second output shaft, the first and second bearings are subjected to lower rotational speed differences than other bearing configurations, in which the first output shaft is supported with respect to the stationary member. As a result, overall rotational speed loads of the bearings are low, allowing the provision of small bearings and reducing friction. Therefore, the first aspect provides a simple and cost-effective torque distribution gearing with a high efficiency.

In an embodiment, the torque distribution gearing comprises a third bearing for rotatably supporting the first output shaft with respect to the input shaft. The third bearing may be configured as a radial bearing for supporting radial loads and allowing an axial displacement of the first output shaft relative to the input shaft. As a result, additional radial support of the first output shaft with a small relative rotational speed is provided, since the rotational speed difference between first output shaft and second output shaft is generally low as explained above. By allowing an axial displacement, interference with any axial support provided by the first bearing or other bearing arrangements is avoided. Furthermore, a process of mounting the first output shaft to the input shaft can be simple.

In an embodiment, the torque distribution gearing comprises a further bearing for rotatably supporting one of the input shaft, the first output shaft and the second output shaft with respect to a housing of the torque distribution gearing. The further bearing may be configured as a radial bearing for supporting radial forces. The further bearing may also be configured as an axial or combined bearing for supporting axial forces. The housing may be the stationary member described above or may be separate therefrom.

In an embodiment, the first bearing is configured for transferring an axial force from the input shaft to the first output shaft, and the second bearing is configured for transferring an axial force from the second output shaft to the first output shaft. With such a configuration, the first output shaft may set axial positions of the input shaft and the second output shaft. As a result, the input shaft, the first output shaft and the second output shaft may be coupled with respect to the axial direction, forming an assembly of three shafts that is axially movable as a whole with respect to the stationary member. Accordingly, an axial position with respect to the stationary member of the assembly including the input shaft and the first and second output shafts can be set in a simple manner, for example via a single bearing. As an example, an additional axial bearing may be provided for setting the axial position of the assembly. As another example, the above-described further bearing may support axial loads so as to set the axial position of the assembly.

In an embodiment, the torque distribution gearing comprises a coupling element for transferring an axial force from a planetary gear set element to the second output shaft. The coupling element may be configured for transferring a torque from the planetary gear set element to the second output shaft in addition to the axial force. The torque distribution gearing further comprises a driving unit for driving the input shaft. The driving unit is operatively connected to the input shaft. The driving unit may be configured as described above. The driving unit may further comprise at least one gear set in a torque flow between the motor and the input shaft. The gear set of the driving unit may form a single-gear or shiftable transmission. The gear set may comprise spur gears, helical gears and/or worm gears. The first bearing is configured for transferring an axial force resulting from a torque of the driving unit via the input shaft to the first output shaft. For example, such an axial force may arise from helical gears being present in the torque flow from the motor to the input shaft. As another example, such an axial force may arise from the torque being transferred from the input shaft to the planetary gear set elements, for example via a helical gear. The second bearing is configured for transferring the axial force from the planetary gear set element via the coupling element and the second output shaft to the first output shaft. For example, such an axial force may arise from the planetary gear set element being provided with a helical gear. According to the embodiment, axial forces from the input shaft as well as axial forces from the second output shaft are transferred to the first output shaft. As a result, they are not introduced into the housing, thereby improving vibration behavior of the torque distribution gearing. Furthermore, the torque distribution gearing may be configured such that the axial force transferred by the input shaft and the axial force transferred by the second output shaft have opposite directions and are similar in magnitude, thereby reducing overall load on the first output shaft.

In an embodiment, the torque distribution gearing is configured such that a torque applied by the driving unit to the input shaft in one direction of rotation of the input shaft as the input shaft rotates in the one direction results in a first axial force applied to the input shaft and a second axial force applied to the planetary gear set element. The first and second axial forces are equal in magnitude and opposite in direction. The one direction of rotation of the input shaft may be a direction of rotation corresponding to the regular operation described above, for example forward driving of the vehicle. The torque applied in one direction may be a torque corresponding to a driving condition of the vehicle, in which the vehicle is propelled by a torque produced by the driving unit. Furthermore, a torque in the other direction applied by the input shaft to the driving unit as the input shaft rotates in the one direction results in a third axial force applied to the input shaft and a fourth axial force applied to the planetary gear set element. The third and fourth axial forces are equal in magnitude and opposite in direction. The torque applied in the other direction of rotation of the input shaft may be a torque corresponding to a coasting condition of the vehicle, in which the vehicle coasts due to inertia and a torque is not produced by the driving unit. According to the embodiment, the torque distribution gearing may be configured such that the above-described axial forces transferred from the input shaft and the second output shaft to the first output shaft cancel out within the first output shaft. Thereby, vibration behavior of the torque distribution gearing is further improved.

In an embodiment, the first bearing and the planetary gear set element are arranged on opposite sides of the driving unit in an axial direction of the input shaft. Thereby, force paths for axial forces through the input shaft, the first output shaft and the second output shaft are long, resulting in further improvement in vibration behavior.

In an embodiment, the torque distribution gearing comprises a first planetary gear set and a second planetary gear set. The first planetary gear set comprises at least a first element, a second element and a third element. The second planetary gear set comprises at least a first element, a second element and a third element. The input shaft is non-rotatably connected to the first element of the first planetary gear set. The second element of the first planetary gear set is non-rotatably connected to the first output shaft. The third element of the first planetary gear set is non-rotatably connected to the first element of the second planetary gear set. The second element of the second planetary gear set is connected to a stationary member. The third element of the second planetary gear set is non-rotatably connected to the second output shaft.

A permanent non-rotatable connection is a connection in which the two elements are rigidly coupled together. The elements may be formed as separate elements connected to each other in a non-rotatable manner or integrally. A non-rotatable connection between two elements may also be established by a switching element, e.g. a clutch or a brake. The non-rotatable connection may be established when the switching element is actuated. The non-rotatable connection may be released when the switching element is no longer actuated. The first, second and third elements, for example, may each be a sun gear, a planetary carrier or a ring gear of the respective planetary gear set. In one embodiment, each first element is formed as a sun gear, each second element is formed as a planetary carrier, and each third element is formed as a ring gear. The respective planetary gear set may be a plus or a minus planetary gear set. Each of the planetary gear sets may have planetary gears that may be rotatably mounted on the respective planetary carrier of the respective planetary gear set. The planetary gears may mesh with both the sun gear and the ring gear of the respective planetary gear set. The stationary member may be a housing of the torque distribution gearing. With the above-described configuration of the torque distribution gearing, the two planetary gear sets may be arranged one behind the other in an axial direction. Such an axially stacked configuration makes it possible to provide a torque distribution gearing that is compact, especially in the radial direction. In an alternative embodiment, the two planetary gear sets of the torque distribution gearing may be arranged one behind the other in the radial direction, but at the same axial height. Such a radially stacked configuration enables a torque distribution gearing that is particularly compact, especially in the axial direction.

In an embodiment, the first bearing and the second bearing are arranged on opposite axial sides of the first planetary gear set. Thereby, force paths for axial forces through the input shaft, the first output shaft and the second output shaft are long, resulting in further improvement in vibration behavior. Furthermore, the first planetary gear set itself may provide an additional path for transferring axial forces, thereby further improving vibration behavior.

In a second aspect, the present disclosure relates to a vehicle. The vehicle comprises a torque distribution gearing according to the first aspect. The respective advantages and further features can be taken from the description of the first aspect, wherein embodiments of the first aspect also form embodiments of the second aspect and vice versa.

### Brief description of drawings

Figure 1 shows a vehicle with a torque distribution gearing according to an embodiment of the present disclosure.
Figure 2 schematically shows a general layout of the torque distribution gearing of the vehicle of Figure 1.
Figure 3 schematically shows the torque distribution gearing of Figure 1.
Figure 4 schematically shows axial forces of the torque distribution gearing of Figure 3 in a driving condition.
Figure 5 schematically shows axial forces of the torque distribution gearing of Figure 3 in a coasting condition.

### Detailed description of embodiments

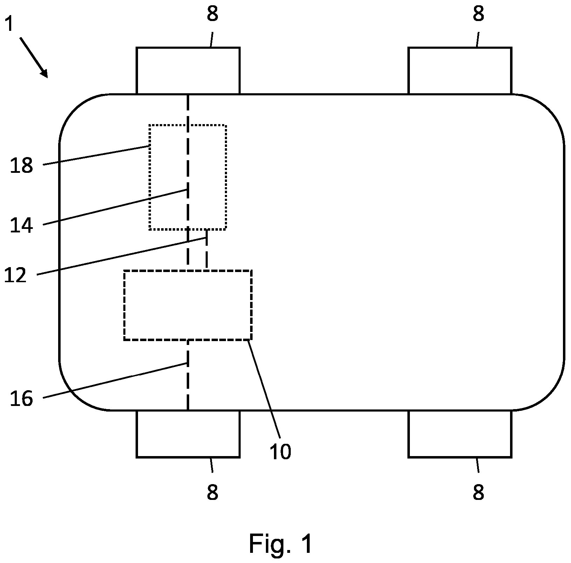

Figure 1 shows a vehicle 1 with a torque distribution gearing 10 according to an embodiment of the present disclosure. The torque distribution gearing 10 is driven by a driving unit 18 and is configured for distributing torque input by the driving unit 18 to at least two drive elements 8. In the present embodiment, the torque distribution gearing 10 comprises an input shaft 12 driven by the driving unit 18 and two output shafts 14, 16 operatively connected to a respective drive element 8. In the present embodiment, the driving unit 18 is an electrical motor, and the drive elements 8 are wheels of the vehicle 1.

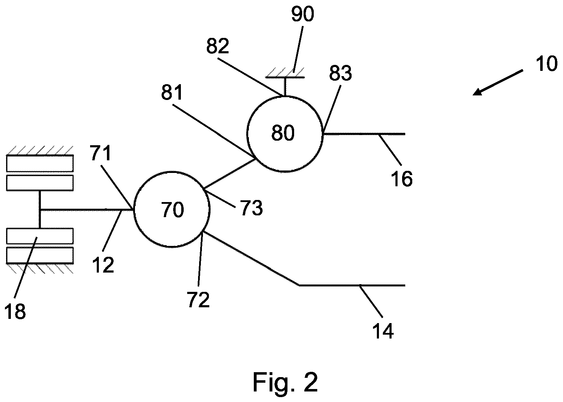

Figure 2 schematically shows a general layout of the torque distribution gearing 10 according to an embodiment of the present disclosure. The torque distribution gearing 10 is a torque distribution gearing with two planetary gear sets. As can be seen from Figure 2, the torque distribution gearing 10 comprises a first planetary gear set 70 having a first element 71, a second element 72 and a third element 73. Furthermore, the torque distribution gearing 10 comprises a second planetary gear set 80 having a first element 81, a second element 82 and a third element 83.

A torque of the driving unit 18 can be introduced into the torque distribution gearing 10 via the first element 71 of the first planetary gear set 70. For this purpose, an input shaft 12 driven by the driving unit 18 is mechanically operatively connected to the first element 71 of the planetary gear set 70, here permanently non-rotatably connected. The third element 73 of the first planetary gear set 70 is permanently non-rotatably connected to the first element 81 of the second planetary gear set 80, here by being integrally formed. The second element 82 of the second planetary gear set 80 is permanently non-rotatably fixed to a stationary member, here a housing 90. A first output shaft 14 is mechanically operatively connected to the second element 72 of the first planetary gear set 70, in this case permanently non-rotatably connected. A second output shaft 16 is mechanically operatively connected to the third element 83 of the second planetary gear set 80, in this case permanently non-rotatably connected via a coupling element 17.

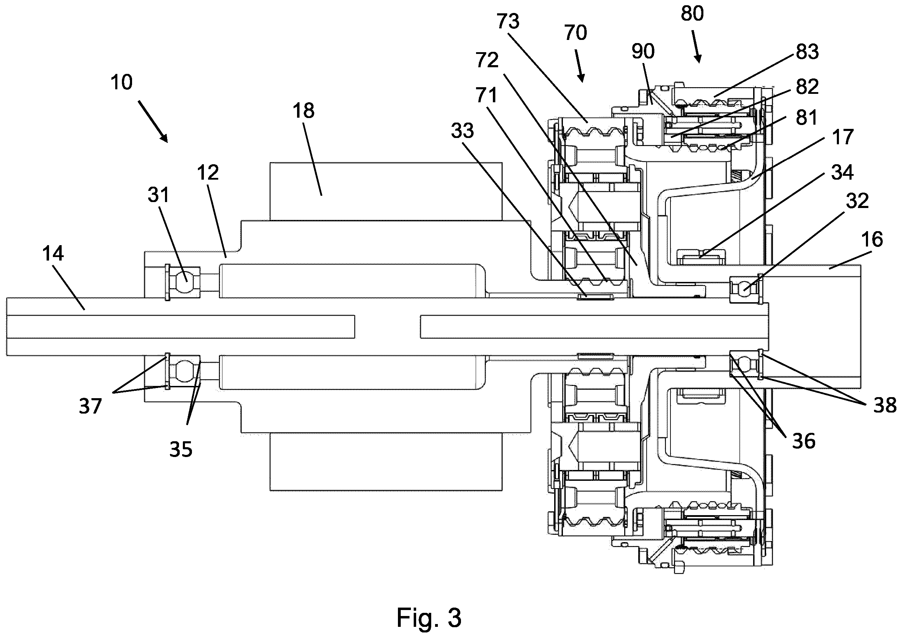

Figure 3 schematically shows the torque distribution gearing 10 of the embodiment of Figure 1. In the torque distribution gearing 10, the input shaft 12, the first output shaft 14 and the second output shaft 16 are arranged coaxially. In the present embodiment, the input shaft 12 and the second output shaft 16 are formed as hollow shafts, and the first output shaft 14 is arranged over the full length of the input shaft 12 and over a partial length of the second output shaft 16. The driving unit 18, specifically a rotor of an electric motor being part of the driving unit 18, is permanently non-rotatably attached to the input shaft 12 in the present embodiment.

The torque distribution gearing 10 comprises the first planetary gear set 70 and the second planetary gear set 80. The planetary gear sets 70, 80 each comprise a first element formed as a sun gear, a second element formed as a planetary carrier and a third element formed as a ring gear. In the present embodiment, each sun gear, each ring gear and accordingly each planetary gear disposed therebetween on a planetary carrier is provided with helical gearing. The input shaft 12 is formed integrally with the sun gear 71 of the first planetary gear set 70. The planetary carrier 72 of the first planetary gear set 70 is non-rotatably connected with the first output shaft 14. The ring gear 73 of the first planetary gear set 70 is formed integrally with the sun gear 81 of the second planetary gear set 80. The planetary carrier 82 of the second planetary gear set 80 is provided non-rotatably with respect to the stationary member being formed as the housing 90. The ring gear 83 of the second planetary gear set 80 is non-rotatably connected to the second output shaft 16 via a coupling element 17. The coupling element 17 is formed in a plate shape extending axially and radially from an axial end of the second output shaft 16 to the ring gear 83 of the second planetary gear set 80.

The first output shaft 14 is rotatably supported in the input shaft 12 by means of a first bearing 31 and a third bearing 33. Furthermore, the first output shaft 14 is rotatably supported in the second output shaft 16 by means of a second bearing 32. The first and second bearings 31, 32 are presently formed as deep groove ball bearings configured for transferring both radial and axial forces. Accordingly, axial positions of the first and second bearings 31, 32 with respect to the shafts they support are fixed. The first bearing 31 is provided on one axial side of the driving unit 18, namely the left side in Figure 3. The first bearing 31 is supported on one axial side thereof by means of respective steps 35 formed in the input shaft 12 and the first output shaft 14. The first bearing 31 is supported on the other axial side thereof by means of retaining rings 37 arranged in respective grooves provided in the input shaft 12 and the first output shaft 14. In the present embodiment, the retaining rings 37 are provided on an axially outer side of the input shaft 12 and the first output shaft 14, namely on the left side in Figure 3, thereby facilitating assembly of the torque distribution gearing 10. The second bearing 32 is provided on the other axial side of the driving unit 18, namely the right side in Figure 3. The second bearing 32 is supported on one axial side thereof by means of respective steps 36 formed in the first output shaft 14 and the second output shaft 16. The second bearing 32 is supported on the other axial side thereof by means of retaining rings 38 arranged in respective grooves provided in the first output shaft 14 and the second output shaft 16. In the present embodiment, the retaining rings 38 are provided on an axially outer side of the input shaft 12 and the first output shaft 14, namely on the right side in Figure 3, thereby facilitating assembly of the torque distribution gearing 10. The third bearing 33 is presently formed as a radial bearing that allows axial displacement, specifically a cylinder roller bearing. A further bearing 34 is provided for supporting the second output shaft 16 in the housing 90. The further bearing 34 is presently formed as a radial bearing that allows axial displacement, specifically a cylinder roller bearing. The further bearing 34 is presently arranged on a radial outer side of the second output shaft 16 and substantially at the axial height of the second bearing 32.

According to the present embodiment, the first output shaft 14 is fully supported in the input shaft 12 and the second output shaft 16, without any direct support with respect to the housing 90. That is, there is no connection between the input shaft 12 and the housing 90 that only involves a single bearing without any other interposed shafts, and all connections between the input shaft 12 and the housing 90 involve the input shaft 12 or the second output shaft 16. During regular operation, a difference in rotational speeds between the input shaft 12 and the first output shaft 14 and a difference in rotational speeds between the first output shaft 14 and the second output shaft 16 are lower compared to a case, in which the first output shaft 14 is supported with respect to the housing 90. Accordingly, the bearings 31, 32, 33 only need to be dimensioned for rotational speed differences between the first output shaft 14 and each of the input shaft 12 of the second output shaft 16. Thus, the torque distribution gearing of the present embodiment is provided with a simple, cost-effective and efficient bearing arrangement.

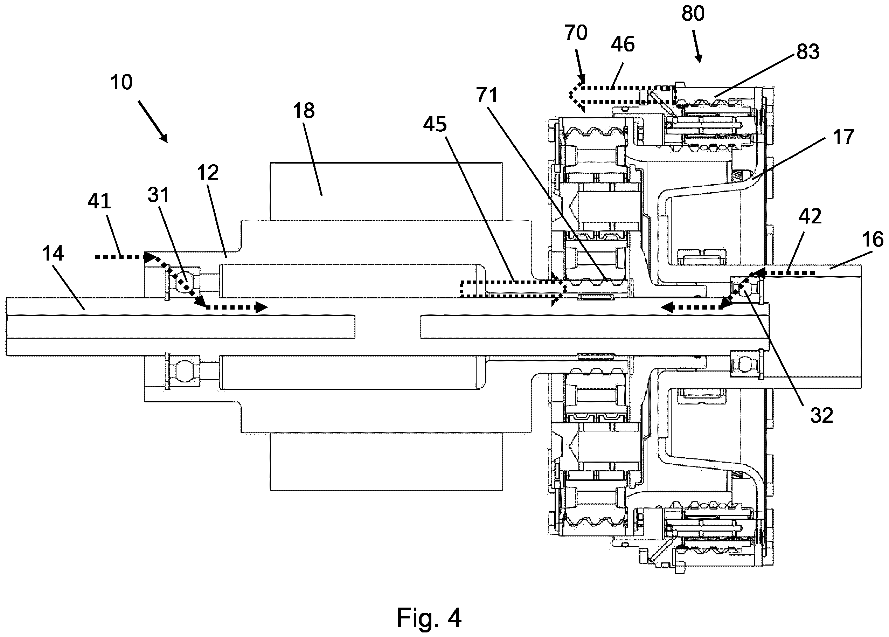

Figure 4 schematically shows axial forces of the torque distribution gearing 10 of Figure 3 in a driving condition. The driving condition presently corresponds to a regular driving operation of the vehicle 1, during which a driving torque is produced by the driving unit 18 for propelling the vehicle 1 forward. During the driving condition, when a torque is applied to the input shaft 12, the helical gearing of the sun gear 71 of the first planetary gear set 70 generates an axial force 45 in the input shaft 12. The axial force 45 is represented as an arrow pointing to the right in Figure 4. The axial force 45 is transferred via the input shaft 12 to the first bearing 31, where it acts as an axial force 41 of an outer ring of the first bearing 31. As described above, the first bearing 31 is configured for transferring axial loads. Accordingly, the axial force 41 is transferred into the first output shaft 14. Furthermore, during the driving condition, the helical gearing of the ring gear 83 of the second planetary gear set 80 generates an axial force 46 as a reaction force of transferred torques. The axial force 46 is represented as an arrow pointing to the left in Figure 4. The axial force 46 is transferred via the coupling element 17 to the second output shaft 16, where it acts as an axial force 42 on an outer ring of the second bearing 32. As described above, the second bearing 32 is configured for transferring axial loads. Accordingly, the axial force 42 is transferred into the first output shaft 14.

In the present embodiment, the helical gearings of the first and second planetary gear set 70, 80 are configured such that the axial force 45 and the axial force 46 arise in opposite axial directions and have the same magnitude. Accordingly, the axial forces 45, 46 introduced into the first output shaft 14 effectively cancel out. In another embodiment, the axial force 45 and axial force 46 have different magnitudes but still act in opposite axial directions. In such an embodiment, the axial force 45 and axial force 46 only partially cancel out in the first output shaft 14, and a residual axial force is supported elsewhere with respect to the housing 90.

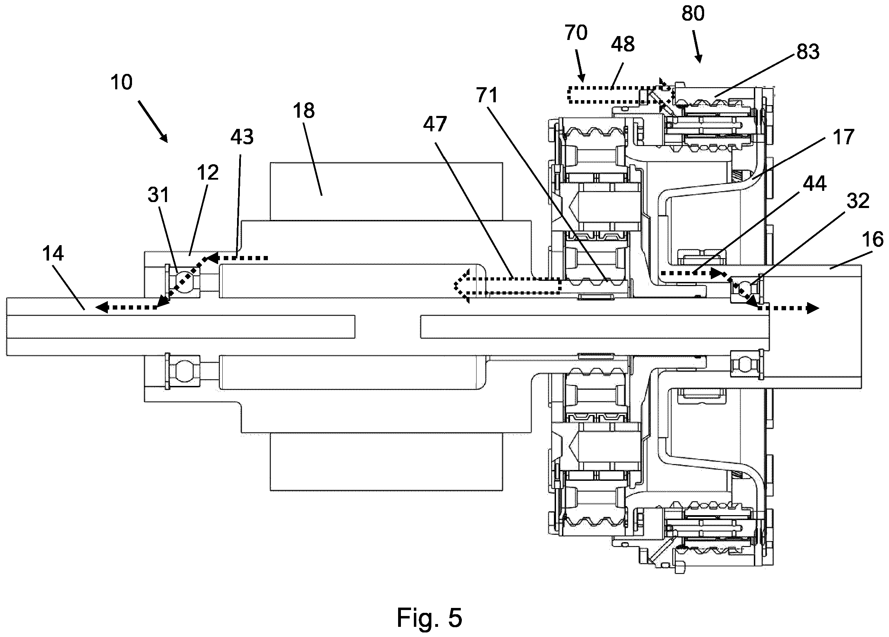

Figure 5 schematically shows axial forces of the torque distribution gearing 10 of Figure 3 in a coasting condition. In the coasting condition, the vehicle 1 coasts due to inertia and without a driving torque being produced by the driving unit 18. Accordingly, torques are introduced into the torque distribution gearing 10 via the output shafts 14, 16 and transferred to the driving unit 18. Therefore, compared to the driving condition of Figure 4, the directions of the axial forces generated at the sun gear 71 of the first planetary gear set 70 and at the ring gear 83 of the second planetary gear set 80 are reversed. As the bearing arrangement is the same as in Figure 4 and the transfer of axial forces is not directionally dependent, the transfer of axial forces is the same as in Figure 4. That is, an axial force 47 generated at the sun gear 71 of the first planetary gear set 70 is introduced as an axial force 43 into the first output shaft 14. Likewise, an axial force 48 generated at the ring gear 83 of the second planetary gear set 80 is introduced as an axial force 44 into the first output shaft 14. As in the embodiment of Figure 4, the axial forces 43, 44 introduced into the first output shaft 14 effectively cancel out. Thus, with the present embodiment, the same advantages as in the driving condition can be obtained in the coasting condition.

### Reference signs

- 1: vehicle
- 8: drive element
- 10: torque distribution gearing
- 12: input shaft
- 14: first output shaft
- 16: second output shaft
- 17: coupling element
- 18: driving unit
- 31: first bearing
- 32: second bearing
- 33: third bearing
- 34: further bearing
- 35, 36: step
- 37, 38: retaining ring
- 41, 42, 43, 44, 45, 46, 47, 48: axial force
- 70, 80: planetary gear set
- 71, 81: first element
- 72, 82: second element
- 73, 83: third element
- 90: housing

## Claims

1. A torque distribution gearing (10) for a vehicle (1), the torque distribution gearing (10) comprising planetary gear set elements (71; 72; 73; 81; 82; 83), an input shaft (12), a first output shaft (14) arranged coaxially to the input shaft (12) and a second output shaft (16) arranged coaxially to the first output shaft (14), wherein the torque distribution gearing (10) is configured to distribute a torque of the input shaft (12) between the first output shaft (14) and the second output shaft (16), wherein the torque distribution gearing (10) is configured such that the input shaft (12) and the first output shaft (14) rotate in the same direction, and wherein the torque distribution gearing (10) comprises a first bearing (31) for rotatably supporting the first output shaft (14) with respect to the input shaft (12) and a second bearing (32) for rotatably supporting the first output shaft (14) with respect to the second output shaft (16).

2. The torque distribution gearing (10) according to claim 1, **characterized by** comprising a third bearing (33) for rotatably supporting the first output shaft (14) with respect to the input shaft (12), wherein the third bearing (33) is configured as a radial bearing for supporting radial loads and allowing an axial displacement of the first output shaft (14) relative to the input shaft (12).

3. The torque distribution gearing (10) according to claim 1 or 2, **characterized by** comprising a further bearing (34) for rotatably supporting one of the input shaft (12), the first output shaft (14) and the second output shaft (16) with respect to a housing (90) of the torque distribution gearing (10).

4. The torque distribution gearing (10) according to any one of the preceding claims, **characterized in that** the first bearing (31) is configured for transferring an axial force (41; 43) from the input shaft (12) to the first output shaft (14), and the second bearing (32) is configured for transferring an axial force (42; 44) from the second output shaft (16) to the first output shaft (14).

5. The torque distribution gearing (10) according to claim 4, **characterized by** comprising a coupling element (17) for transferring an axial force (46; 48) from a planetary gear set element (83) to the second output shaft (16), and a driving unit (18) for driving the input shaft (12), the driving unit (18) being operatively connected to the input shaft (12), wherein the first bearing (31) is configured for transferring an axial force (45; 47) resulting from a torque of the driving unit (18) via the input shaft (12) to the first output shaft (14) and the second bearing (32) is configured for transferring the axial force (46; 48) from the planetary gear set element (83) via the coupling element (17) and the second output shaft (16) to the first output shaft (14).

6. The torque distribution gearing (10) according to claim 5, **characterized in that** the torque distribution gearing (10) is configured such that a torque in one direction applied by the driving unit (18) to the input shaft (12) as the input shaft (12) rotates in the one direction results in a first axial force (45) applied to the input shaft (12) and a second axial force (46) applied to the planetary gear set element (83), wherein the first and second axial forces (45, 46) are equal in magnitude and opposite in direction, and a torque in the other direction applied by the input shaft (12) to the driving unit (18) as the input shaft (12) rotates in the one direction results in a third axial force (47) applied to the input shaft (12) and a fourth axial force (48) applied to the planetary gear set element (83), wherein the third and fourth axial forces (47, 48) are equal in magnitude and opposite in direction.

7. The torque distribution gearing (10) according to claim 5 or 6, **characterized in that** the first bearing (31) and the planetary gear set element (83) are arranged on opposite sides of the driving unit (18) in an axial direction of the input shaft (12).

8. The torque distribution gearing (10) according to any one of the preceding claims, **characterized by** comprising a first planetary gear set (70) and a second planetary gear set (80), wherein the first planetary gear set (70) comprises at least a first element (71), a second element (72) and a third element (73) and the second planetary gear set (80) comprises at least a first element (81), a second element (82) and a third element (83), wherein the input shaft (12) is non-rotatably connected to the first element (71) of the first planetary gear set (70), the second element (72) of the first planetary gear set (70) is non-rotatably connected to the first output shaft (14), the third element (73) of the first planetary gear set (70) is non-rotatably connected to the first element (81) of the second planetary gear set (80), the second element (82) of the second planetary gear set (80) is non-rotatably connected to a stationary member, and the third element (83) of the second planetary gear set (80) is non-rotatably connected to the second output shaft (16).

9. The torque distribution gearing (10) according to claim 7 or 8, **characterized in that** the first bearing (31) and the second bearing (32) are arranged on opposite axial sides of the first planetary gear set (70).

10. A vehicle (1) comprising a torque distribution gearing (10) according to any one of the preceding claims.
